# EUROPEAN PATENT APPLICATION

(11) **EP 1 995 285 A1**
(43) Date of publication of application: **26.11.2008**
(21) Application number: 07075378.5
(22) Date of filing: 21.05.2007
(51) Int. Cl.: C09D 5/00, E01F 9/04

(54) **Photocurable compositions for road marking paint**

(71) Applicant: Hexion Specialty Chemicals Research Belgium S.A., 1348 Ottignies Louvain-la-Neuve (BE)
(72) Inventor: Ghiglione, Gianfranco, Hexion Specialty Chemicals S.r.l., 12040 Sant'Albano Stura CN (IT)

(57) **Abstract**

The present invention relates to a paint composition for road marking curable with actinic energy in a short time and has a good flexibility, adhesion on the road surface and with a well-preserved reflectance after traffic exposure. The paint composition comprising: radiation curable resins with unsatured ethylenic groups, a filler, a pigment, a photointiator (radical or cationic). When from radical type then an α hydroxyketone class and a bis acyl phosphine class are prefer and optionally glass spheres.

## Description

The present invention relates to a paint composition for road marking curable with light energy in a short time with a good flexibility, adhesion on the road surface and with a well-preserved reflectance after traffic exposure.

Conventional coating materials for road markings are classified into ordinary temperature, heating and melting curable systems. The coating material for road marking is used for marking boundary lines or road signs and mainly required to have good drying property, adhesive strength to the road surface, abrasion resistance, staining resistance and the like.

The coating materials curable at ordinary temperature or higher are predominantly used for marking outer lines and lane boundaries. These coating materials use a ketone-type, ester-type, aliphatic or aromatic solvent having a high evaporation rate and since the coated film is formed by volatilizing the solvent, there are serious problems in view of safety and air pollution. In order to solve these problems, coating materials for road markings using an aqueous coating material have been proposed. However, these coating materials for road markings are not easily fulfilling the fast drying property as required.

The coating material via hot melt is predominantly used for marking zebra zones and center lines. This is a melting-type coating material which is used after melting at from 180 to 220°C, and therefore, this coating material has super-quick drying property and is free of the problem of air pollution. However, in the case of the melting-type coating material, a petroleum resin is generally used as a binder component and since the petroleum resin itself is poor in the abrasion resistance, this coating material is disadvantageously high in the rate of abrasion due to abrading by tires of running cars. In order to maintain the function as a road marking for a necessary time period, the coated film must be formed to have a fairly large thickness of 1 mm or more. For forming a film to have a large thickness, a huge amount of coating material is consumed, the transportation cost of the coating material increases, and the coating work and the like require great labors. Furthermore, a heat source for heat-melting the coating material must be carried into the field and working in a high-temperature environment is unavoidable. Thus, improvements have been demanded from the standpoint of safety and health of workers.

In recent years, photoradical polymerization and photocationic polymerization are drawing attention in view of the quick drying property, ordinary temperature curability, availability of a solvent-free system and energy savings, and these are practically used in various fields such as printed board fabrication, resist or photomask, wood painting, optical fiber coating, hard coating on plastics and can coating. However, since in almost all cases, the light used for the curing has a wavelength in an ultraviolet region of 400 nm or less, the material poorly transmits the light and as in the case of a coating material for road markings, when a film is formed to have a large thickness using a coating material containing a pigment having high covering power, such as titanium oxide, the film is very difficult to cure. To solve this problem, JP-A-8-209058 has attempted to use an acylphosphine oxide-type photopolymerization initiator which is sensitized by a visible ray at from 400 to 450 nm having a relatively high permeability through a material and generates a radical. However, since JP-A-8-209058 uses a low boiling point monomer such as methyl methacrylate, malodors and air pollution are very likely caused. Moreover, the methyl methacrylate is very slow in the photocuring rate and the coating material for road markings formed is difficult to photocure in seconds.

The EP 0 915 136 has proposed an alternative photocurable paint composition for road markings comprising an ethylenically unsaturated group, a filler, a cationic dye, a quaternary organic borate-type sensitizer and an ultraviolet radical promoter, additionally comprising glass beads.

The present invention provides a paint composition capable of curing in short time and with a film thickness of more than 200µ. The composition is also free of low boiling point monomer, and so the drawbacks such as the odors and/or toxicity aspect of previous system are eliminated.

The present technology could drastically reduce the time to apply a coating/paint on the road with the consequent reduction in cost for stopping/slowering the traffic with the related disadvantages.
This technology is less dependant from weather conditions like air drying alkyds.

The hardness/chemical properties of this system is in order of magnitude higher than any of the actual technologies available on the market such as air drying alkyds or thermoplastic acrylics and hot melts. The excellent properties increase considerably the durability of the paint with the related cost advantages. Moreover, due to the latest developments in UV application equipments such as the reduction of the dimension which lead to "portable" equipments and make this technology more use-friendly. As for example small equipment used in the automotive refinish car application.
UV systems show a very fast crosslinking and excellent performances and for this reason could be considered, in our opinion, excellent binders for road marking paints. Obviously different problems have to be solved in order to allow this technology to work in a particular field of application as road marking paint.
The first problem is that road marking paints are very strong filled systems containing titanium dioxide, calcium carbonate (or other fillers) and glass spheres.
The second problem is that they are applied at very high film thicknesses (more than 200µ) and glass spheres are sprayed on the wet film. This situation is exactly the opposite of the right one for UV curing where low film thickness and clear or low filled paints are requested. By using an optimized photoinitiator composition it has been found an excellent crosslinking till more than 250µ of applied film.
Another problem we had to solve was the poor adhesion on tarmac, concrete and any other potential substrate used for open to traffic surfaces. To solve this problem: a very thin clear film working as a primer was to apply and then, after curing, the final paint was applied. In this way we obtain a very good adhesion.

Different UV curable resins have been tested: unsaturated polyesters, epoxy-acrylates, polyester-acrylates, urethane acrylates and donor acceptor acrylate-free. Different types of reactive monomers have been evaluated: tripropyleneglygol diacrylate (TPGDA), dipropyleneglygol diacrylate (DPGDA), styrene and an adduct of acrylic acid and Cardura E 10 (ACE) (Cardura E 10 is a glycidyl ester and traded by Hexion Specialty Chemicals Inc). Combinations of the resins with the reactive diluents have demonstrated to be suitable for this type of application. The resin is used in the range of 5 to 25 % in weight and the reactive diluent in the range of 5 to 25 % in weight on total formulation.
The fillers are use in the range of 15 to 40 % in weight on total formulation and pigments, such as titanium dioxide, are used in the range of 5 to 30%. The glass spheres are use in a range from 0 to 40 % in weight on total formulation and the particle size of from 30 to 300 µ with a preferred range of from 50 to 250 µ .
The photo initiator of the invention could initiate a polymerization by a radical or a cation. The radical polymerization is the preferred one. The photo radical initiator is used in the range of 0.3 to 3 % in weight on total formulation. The initiator is preferably a blend of at least two initiators. Specific examples of the compound represented by benzoin-type compounds such as benzoin isobutyl ether, benzoin isopropyl ether, benzoin ethyl ether and benzyl dimethyl ketal, acetophenone-type compounds such as diethoxyacetophenone, 2-hydroxy-2-methyl-1-phenylpropan-1-one, 1-(4-isopropylphenyl)-2-hydroxy-2-methylpropan-1-one, 1-hydroxycyclohexyl phenyl ketone, 4-tert-butyltrichloroacetophenone, 2-methyl-1-[4-(methylthio)phenyl]-2-moipholinopropanone-1 and 2-benzyl-2-dimethylamino-1-(4-morpholinophenyl)-butanone-1, glyoxy ester-type compounds such as methylphenylglyoxylate, benzophenone-type compounds such as benzophenone, methyl benzoylbenzoate, hydroxybenzophenone, 4-phenylbenzophenone and acrylated benzophenone, acylphosphine oxide-type compounds such as 2,4,6-trimethylbenzoyldiphenylphosphine oxide, bis(2,6-dimethoxybenzoyl)-2,4,4-trimethylpentylphosphine oxide, bis(2,6-dichlorobenzoyl) phenylphosphine oxide, bis(2,6-dichlorobenzoyl)-2,5-dimethylphenylphosphine oxide, bis(2,4,6-trimethylbenzoyl)phenylphosphine oxide, sulfonium salts and iodonium salts . Commercially available photoinitiators are for example: Irgacure 184 and Irgacure 819 supplied by Ciba Specialty Chemicals, or blends like Irgacure 2022.

The experimental conditions:
Paint preparation: all the components are mixed in to speed cowless dissolver EXCEPT the part of the glass spheres, after dispersion the glass spheres are added at low rotation speed of the mixer (to avoid that the spheres are broken).
Coating application: by a standard hand driven spray gun and on the road. Tests are done on existing old paint or on asphalt. The Layer thickness is in the range of 300 to 700µ.

### Curing of the coating:

UV dose: 600 - 1000 mJ/cm2 (obtained with two passages of 300 - 500 mJ/cm²)
Lamp type: 200 mm length, light arc, 200 W/cm, doping Gallium
The speed of the hand driven trolley with the lamp is adapted to have the above mentioned UV dose

The reflectance is measured on the road after cleaning but in under dry condition.
A prefer combination is an unsaturated polyester resin and DPGDA.

### Typical formulation

| | |
|---|---|
| UV resin | 14 |
| Calcium carbonate | 30 |
| Titanium dioxide | 10 |
| Irgacure 819 | 0.5 |
| Irgacure 184 | 1.5 |
| Glass spheres 62-210 | 30 |
| DPGDA | 14 |

One of the important properties of the road marking paint is the reflectance of the light and even more important is that the reflectance keeps constant over the use period on the road (see Table 1). The refection of the light is due to the presence of the glass spheres. Glass spheres 62-210 are blended in the paint where glass spheres 180-850 are over sprayed on the wet stripe before the curing. We have found that the paint composition of the invention starts at a lower value but shows a slight increase over time and reach values close to the initial value of standard solvent based formulation. The lower initial value is due to the high abrasion resistance of UV system. In order to achieve the max reflectance value you need more time to uncover the glass spheres from the paint (traffic abrasion). In the same time the best reflectance retention is due to the better capability of UV system to keep the glass spheres on the stripe surface. This makes the stripe more visible in the night.

**Table 1 : Reflectance of the road marking paint after exposure on a road in real traffic conditions.**

| | 1 | 2 | 3 |
|---|---|---|---|
| Days | | | Comparative |
| 0 | 250 | 287 | 320 |
| 2 | 314 | 372 | 340 |
| 4 | 319 | 367 | 316 |
| 10 | 287 | 334 | 243 |
| 18 | 318 | 355 | 235 |
| 46 | 380 | 395 | 223 |

The formulation 1 is the composition as given above applied on old worn-out road marking strip, the formulation 2 has the same composition but applied on virgin asphalt in both cases the road paint marking was applied on a thin primer. The primer has the same resin composition as the filled paint formulation but without filler and glass spheres.

## Claims

1. A paint composition comprising:
a) a radiation curable resins with unsatured ethylenic groups,
b) a reactive diluent
c) a filler,
d) a pigment,
e) a photointiator,
f) and optionally glass spheres

2. The paint composition of claim 1 comprising:
a) a radition curable resins with unsatured ethylenic groups,
b) a reactive diluent
c) a filler,
d) a pigment,
e) a radical photointiator from the α hydroxyketone class, from the bis acyl phosphine class or a cationic photoinitiator based on sulfonium salts and iodonium salts and,
f) optionally glass spheres.

3. The composition as claimed in claims 1 or 2 wherein the curable resins are unsaturated polyesters, epoxy-acrylates, urethane acrylate, polyester-acrylates and donor acceptor acrylate-free, from which the unsaturated polyester is the preferred in a range of from 5 to 25 % in weight on total formulation.

4. The composition as claimed in claims 1-3 wherein the reactive diluent is ranged of from 5 to 25% in weight on total formulation.

5. The composition as claimed in claims 1-4 wherein the filler is ranged of from 15 to 40 weight % on total formulation.

6. The composition as claimed in claims 1-5 wherein the pigment is ranged of from 5 to 30 weight % on the total formulation.

7. The composition as claimed in claims 1-6 wherein the radical potointiator from the α hydroxyketone class and a photointiator of the bis acyl phosphine class or a cationic photoinitiator based on sulfonium salts and iodonium salts with a total ranged in 0.3 to 3 weight % on total formulation.

8. The composition as claimed in claims 1-7 wherein the glass spheres have a particle size of from 30 to 300 µ with a preferred range of from 50 to 250 µ and in a range of from 0 to 40 % in weight on total formulation

9. A use of a composition according to one previous claim as paint for marking road with a well-preserved reflectance after traffic exposure.

10. An application method of a composition of claims 1 to 8 which consists in a spraying of the composition followed by a radiation exposure.
